# EUROPEAN PATENT APPLICATION

(11) **EP 4 459 713 A1**
(43) Date of publication of application: **06.11.2024**
(21) Application number: 22915523.9
(22) Date of filing: 31.10.2022
(51) Int. Cl.: H01M 4/525, H01M 4/505

(54) **POSITIVE ELECTRODE ACTIVE MATERIAL FOR NON-AQUEOUS ELECTROLYTE SECONDARY BATTERY**

(30) Priority: 27.12.2021 JP 2021212126
(71) Applicant: Panasonic Intellectual Property Management Co., Ltd., Osaka-shi, Osaka 540-6207 (JP)
(72) Inventor: FUKUTOME, Daiki, Kadoma-shi, Osaka 571-0057 (JP); KAWADA, Hiroshi, Kadoma-shi, Osaka 571-0057 (JP)
(74) Representative: Novagraaf International SA
(86) International application number: PCT/JP2022/040664
(87) International publication number: WO 2023/127290

(57) **Abstract**

This non-aqueous electrolyte secondary battery positive electrode active material is characterized by including a lithium-containing complex oxide composed of secondary particles formed by flocculation of primary particles, the lithium-containing complex oxide including Ni, Mn, and an additive element M, the additive element M including at least any one element selected from Nb, Mo, Ta, and W, the variation coefficient (standard deviation/arithmetic mean) of the concentration of the at least one element of the Nb, the Mo, the Ta, and the W when the secondary particle cross-section is subjected to EPMA analysis being 0.7 or less, and the standard deviation of the primary particle size being less than 0.05.

## Description

### TECHNICAL FIELD

The present invention relates to a technique of a positive electrode active material for a non-aqueous electrolyte secondary battery.

### BACKGROUND

In recent years, as secondary batteries with a high output and a high energy density, non-aqueous electrolyte secondary batteries that include a positive electrode, a negative electrode, and a non-aqueous electrolyte and perform charge and discharge by allowing lithium ions to move between the positive electrode and the negative electrode are widely used.

For example, Patent Literature 1 discloses a positive electrode active material including lithium transition metal-containing composite oxide particles having a composition represented by General Formula (A): Li₁₊ᵤNiₓCo_{y}Mn_{z}MₜO₂ (where -0.05 ≤ u ≤ 0.50, x + y + z + t= 1, 0.3 ≤ x ≤ 0.90, 0 ≤ y ≤ 0.5, 0.0 ≤ z ≤ 0.5, 0 < t ≤ 0.05, and M is one or more additive elements selected from Mg, Al, Si, Ca, Ti, Si, V, Cr, Zr, Nb, Mo, Hf, Ta, and W) and a layered rock salt-type crystal structure.

### CITATION LIST

### PATENT LITERATURE

Patent Literature 1: JP 2021-048071 A

### SUMMARY

An object of the present disclosure is to provide a positive electrode active material for a non-aqueous electrolyte secondary battery capable of improving initial capacity of the non-aqueous electrolyte secondary battery.

A non-aqueous electrolyte secondary battery positive electrode active material according to one aspect of the present disclosure contains a lithium-containing composite oxide composed of secondary particles formed by aggregation of primary particles, the lithium-containing composite oxide including at least one selected from the group consisting of Ni, Co, Mn, and Al, and an additive element M, in which the additive element M includes at least one of Nb, Mo, Ta, and W, a coefficient of variation (standard deviation/arithmetic mean) of a concentration of at least one of Nb, Mo, Ta, and W when a cross section of the secondary particle is subjected to EPMA analysis is less than or equal to 0.7, and a standard deviation of a size of the primary particle is less than 0.05.

According to one aspect of the present disclosure, it is possible to provide a positive electrode active material for a non-aqueous electrolyte secondary battery capable of improving initial capacity of the non-aqueous electrolyte secondary battery.

### BRIEF DESCRIPTION OF DRAWINGS

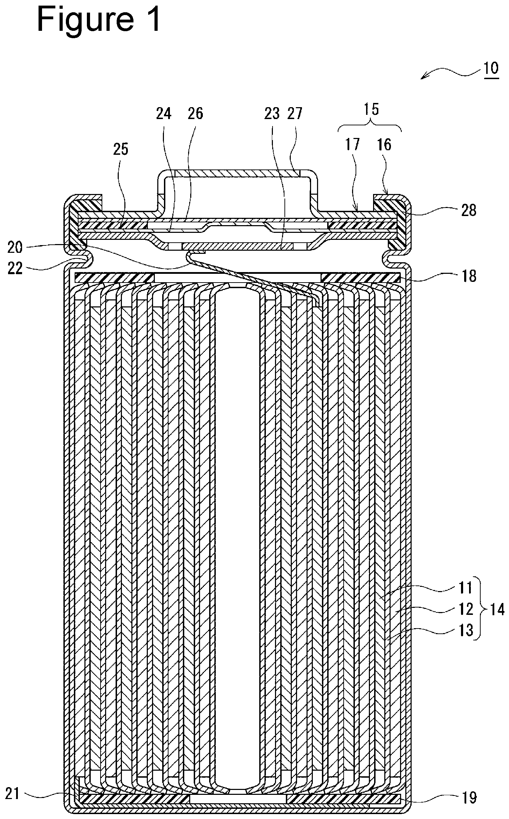

FIG. 1 is a cross-sectional view of a non-aqueous electrolyte secondary battery as an example of an embodiment.

### DESCRIPTION OF EMBODIMENTS

Hereinafter, an example of an embodiment will be described in detail. The drawings referred to in the description of embodiments are schematically illustrated, and dimensional ratios and the like of components drawn in the drawings may be different from actual ones.

FIG. 1 is a schematic cross-sectional view of a non-aqueous electrolyte secondary battery as an example of an embodiment. A non-aqueous electrolyte secondary battery 10 illustrated in FIG. 1 includes a winding-type electrode assembly 14 formed by winding a positive electrode 11 and a negative electrode 12 with a separator 13 interposed therebetween, a non-aqueous electrolyte, insulating plates 18 and 19 that are disposed above and below the electrode assembly 14, respectively, and a battery case 15 housing the above-described members. The battery case 15 includes a bottomed cylindrical case body 16 and a sealing assembly 17 that closes an opening of the case body 16 Instead of the winding-type electrode assembly 14, an electrode assembly having another form, such as a stacked electrode assembly in which positive electrodes and negative electrodes are alternately stacked with separators interposed therebetween, may be applied. In addition, examples of the battery case 15 include a metal case having a cylindrical shape, a square shape, a coin shape, a button shape, or the like, and a resin case (so-called laminated type) formed by lamination with a resin sheet.

The non-aqueous electrolyte contains, for example, a non-aqueous solvent and an electrolyte salt dissolved in the non-aqueous solvent. Examples of the non-aqueous solvent include esters, ethers, nitriles, amides, and a mixture of two or more thereof. The non-aqueous solvent may contain a halogen-substituted product in which at least a part of hydrogen in a solvent described above is substituted with a halogen atom such as fluorine. Examples of the electrolyte salt include a lithium salt such as LiPF₆. The electrolyte is not limited to a liquid electrolyte, and may be a solid electrolyte in which a gel polymer or the like is used.

The case body 16 is, for example, a bottomed cylindrical metal container. A gasket 28 is provided between the case body 16 and the sealing assembly 17 to ensure the sealability inside the battery. The case body 16 has a projecting portion 22 in which, for example, a part of the side part of the case body 16 protrudes inward to support the sealing assembly 17. The projecting portion 22 is preferably formed in an annular shape along a circumferential direction of the case body 16, and supports the sealing assembly 17 on an upper surface thereof.

The sealing assembly 17 has a structure in which a filter 23, a lower vent member 24, an insulating member 25, an upper vent member 26, and a cap 27 are sequentially stacked from the electrode assembly 14. Each member included in the sealing assembly 17 has, for example, a disk shape or a ring shape, and the members excluding the insulating member 25 are electrically connected to each other. The lower vent member 24 and the upper vent member 26 are connected to each other at the respective center regions, and the insulating member 25 is interposed between the respective peripheral portions. When the internal pressure of the non-aqueous electrolyte secondary battery 10 increases due to heat generated by an internal short circuit or the like, for example, the lower vent member 24 deforms so as to push the upper vent member 26 up toward the cap 27 side and breaks, and thus the current pathway between the lower vent member 24 and the upper vent member 26 is cut off. When the internal pressure is further increased, the upper vent member 26 is broken, and gas is discharged through an opening of the cap 27.

In the non-aqueous electrolyte secondary battery 10 illustrated in FIG. 1, a positive electrode lead 20 attached to the positive electrode 11 extends through a through-hole of the insulating plate 18 toward a side of the sealing assembly 17, and a negative electrode lead 21 attached to the negative electrode 12 extends through the outside of the insulating plate 19 toward the bottom side of the case body 16. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to a bottom inner surface of the case body 16 by welding or the like, and the case body 16 becomes a negative electrode terminal.

Hereinafter, the positive electrode 11, the negative electrode 12, and the separator 13 will be described in detail.

### [Positive Electrode]

The positive electrode 11 includes a positive electrode current collector and a positive electrode mixture layer provided on the positive electrode current collector. The positive electrode mixture layer contains a positive electrode active material. In addition, the positive electrode mixture layer may contain a conductive agent, a binder, or the like. The positive electrode 11 can be obtained, for example, by applying a positive electrode mixture slurry containing a positive electrode active material, a conductive agent, a binder, and the like onto a positive electrode current collector and drying the positive electrode mixture slurry to form a positive electrode mixture layer on the positive electrode current collector, and then rolling the positive electrode mixture layer. The positive electrode mixture layer may be provided on one surface of the positive electrode current collector, or may be provided on both surfaces of the positive electrode current collector.

As the positive electrode current collector, a foil of a metal stable in a potential range of the positive electrode, such as aluminum or an aluminum alloy, a film in which the metal is disposed on a surface layer, or the like can be used. The positive electrode current collector has a thickness of, for example, about greater than or equal to 10 µm and less than or equal to 100 µm.

The positive electrode active material is composed of secondary particles formed by aggregation of primary particles, and contains a lithium-containing composite oxide including at least one selected from the group consisting of Ni, Co, Mn, and Al, and an additive element M.

A proportion of Ni in the lithium-containing composite oxide is preferably in a range of greater than or equal to 50 mol% and less than or equal to 95 mol%, and more preferably in a range of greater than or equal to 65 mol% and less than or equal to 95 mol%, with respect to the total molar amount of metal elements excluding Li, from the viewpoint of increasing battery capacity and suppressing deterioration of charge and discharge cycle characteristics.

A proportion of Mn in the lithium-containing composite oxide is preferably in a range of greater than or equal to 0 mol% and less than or equal to 50 mol%, and preferably in a range of greater than or equal to 0 mol% and less than or equal to 40 mol%, with respect to the total molar amount of metal elements excluding Li, from the viewpoint of increasing battery capacity and suppressing deterioration of charge and discharge cycle characteristics.

A proportion of Co in the lithium-containing composite oxide is preferably in a range of greater than or equal to 0 mol% and less than or equal to 20 mol%, and preferably in a range of greater than or equal to 0 mol% and less than or equal to 10 mol%, with respect to the total molar amount of metal elements excluding Li, from the viewpoint of increasing battery capacity and suppressing deterioration of charge and discharge cycle characteristics.

A proportion of Al in the lithium-containing composite oxide is preferably in a range of greater than or equal to 0 mol% and less than or equal to 20 mol%, and preferably in a range of greater than or equal to 0 mol% and less than or equal to 10 mol%, with respect to the total molar amount of metal elements excluding Li, from the viewpoint of increasing battery capacity and suppressing deterioration of charge and discharge cycle characteristics.

The additive element M contained in the lithium-containing composite oxide includes at least one of Nb, Mo, Ta, and W. The additive element M may include elements other than Nb, Mo, Ta, and W. Examples of the element other than Nb, Mo, Ta, and W include Zr, B, Mg, Sc, Y, Ti, Fe, Cu, Zn, Cr, Pb, Sn, Na, K, Ba, Sr, Ca, Si, V, and Hf. Here, the additive element M may be present on a particle surface in the form of a single additive element M or a compound containing an additive element M, or may be incorporated into a crystal structure of the lithium-containing composite oxide and contained inside the particle.

A proportion of the additive element M in the lithium-containing composite oxide is preferably in a range of greater than or equal to 0.01 mol% and less than or equal to 10 mol%, and more preferably greater than or equal to 0.01 mol% and less than or equal to 5 mol%, with respect to the total molar amount of metal elements excluding Li, from the viewpoint of increasing battery capacity and suppressing deterioration of charge and discharge cycle characteristics.

The composition of the lithium-containing composite oxide can be confirmed by, for example, Rietveld analysis of parameters obtained by inductively coupled plasma emission spectrometry and powder X-ray diffraction.

In the lithium-containing composite oxide, from the viewpoint of improving initial capacity of the non-aqueous electrolyte secondary battery, a coefficient of variation of a concentration of at least one of Nb, Mo, Ta, and W when a cross section of the secondary particle is subjected to EPMA analysis needs to be less than or equal to 0.7, preferably less than or equal to 0.6, and more preferably less than or equal to 0.4. The coefficient of variation is an index indicating the distribution of Nb, Mo, Ta, and W present in the secondary particles. As the value of the coefficient of variation is lower, the distribution of Nb, Mo, Ta, and W in the secondary particles is less biased and uniformly dispersed.

The coefficient of variation of the concentration of each of the additive elements Nb, Mo, Ta, and W is determined as follows. First, the positive electrode 11 or the positive electrode active material is embedded in a resin, and the cross section of the secondary particle is exposed by cross section polisher (CP) processing or the like. Then, in the processed cross section, five secondary particles are randomly selected from an arbitrarily selected analysis region (region of 40 µm × 30 µm), and the cross sections of the selected five secondary particles are subjected to concentration mapping of Nb, Mo, Ta, or W by EPMA (electron probe microanalyzer) analysis. Conditions for the EPMA analysis are an acceleration voltage of 10 kV, an irradiation current of 30 nA, a beam diameter of < 1 µm, a step size of 0.16 µm, a number of measurement points of 256 × 192 points, an analysis region of 40 µm × 30 µm, and an integration time of 50 milliseconds. Then, an arithmetic mean (µ) and standard deviation (σ) of the concentrations of Nb, Mo, Ta, and W are determined from the concentration mapping of Nb, Mo, Ta, and W by EPMA analysis. Then, the coefficient of variation (CV) of the concentration of Nb, Mo, Ta, or W is obtained by an equation: CV = σ/µ.

In addition, in the lithium-containing composite oxide, from the viewpoint of improving initial capacity of the non-aqueous electrolyte secondary battery, a standard deviation of a primary particle size needs to be less than 0.05, and is preferably 0.04.

An average size of the primary particles in the lithium-containing composite oxide is, for example, preferably less than or equal to 0.07 µm², and more preferably less than or equal to 0.06 µm², from the viewpoint of further improving initial capacity of the non-aqueous electrolyte secondary battery.

The average size and standard deviation of the primary particles in the lithium-containing composite oxide are determined as follows. First, the positive electrode 11 or the positive electrode active material is embedded in a resin, the cross section of the secondary particle is exposed by cross section polisher (CP) processing or the like, and the cross section is imaged using a scanning electron microscope (SEM). Then, 30 primary particles are randomly selected from the cross-sectional SEM image. Grain boundaries of the selected 30 primary particles are observed, an outer shape of the primary particle is specified, and then, an area of each of the 30 primary particles is measured. Using the area as the size of the primary particle, the average size and standard deviation of the primary particles are obtained.

An average particle size of the secondary particles in the lithium-containing composite oxide is, for example, preferably greater than or equal to 3 µm and less than or equal to 25 µm, and more preferably greater than or equal to 7 µm and less than or equal to 20 µm, from the viewpoint of further improving initial capacity of the non-aqueous electrolyte secondary battery. The average particle size of the secondary particles in the lithium-containing composite oxide is a volume average particle size measured by a laser diffraction method, and is a median diameter at which a volume integrated value is 50% in a particle size distribution. The average particle size of the secondary particles in the lithium-containing composite oxide can be measured by a laser diffraction method using, for example, MT3000II manufactured by MicrotracBEL Corp.

A crystallite size of the lithium-containing composite oxide is, for example, preferably greater than or equal to 300 Å and less than or equal to 600 Å, and more preferably greater than or equal to 350 Å and less than or equal to 550 Å, from the viewpoint of further improving initial capacity of the non-aqueous electrolyte secondary battery.

The crystallite size of the lithium-containing composite oxide is calculated by analyzing an X-ray diffraction pattern obtained by an X-ray diffraction method by a whole powder pattern decomposition method (hereinafter, referred to as a "WPPD method").

The analysis procedure by the WPPD method is as follows.

Procedure 1: Software (TOPAS) is activated to read measurement data.

Procedure 2: Emission profile is set up. (Cu tube and Bragg Brentano focusing optical system are selected.)

Procedure 3: Background is set up. (Legendre polynomial is used as a profile function and the number of terms is set to be greater than or equal to 8 and less than or equal to 20.)

Procedure 4: Instrument is set up. (A fundamental parameter is used, and slit conditions, a filament length, and a sample length are inputted.)

Procedure 5: Corrections are set up. (Sample displacement is used. Absorption is also used in a case where a sample packing density in a sample holder is low. In this case, absorption is fixed to a linear absorption coefficient of the measurement sample.)

Procedure 6: Crystal structure is set up. (A space group is set as R3-m. A lattice constant, a crystallite diameter, and a lattice distortion are used. Spread of a profile due to the crystallite diameter and the lattice distortion is set as Lorentz function.)

Procedure 7: Calculation is performed. (The background, sample displacement, diffraction intensity, lattice constant, crystallite diameter, and lattice distortion are refined, and Le-ball equation is used for calculation.)

Procedure 8: Analysis is completed when a standard deviation of crystallite diameter is less than or equal to 6% of a refined value. When greater than 6%, procedure 9 is performed.

Procedure 9: Spread of the profile due to the lattice distortion is set as Gaussian function. (The crystallite diameter remains as Lorentz function.)

Procedure 10: Calculation is performed. (The background, sample displacement, diffraction intensity, lattice constant, crystallite diameter, and lattice distortion are refined.)

Procedure 11: Analysis is completed when a standard deviation of crystallite diameter is less than or equal to 6% of a refined value. When greater than 6%, analysis is impossible.

Hereinafter, an example of a method for producing the lithium-containing composite oxide used in the present embodiment will be described below.

A method for preparing a positive electrode active material of the present embodiment includes, for example, a first step of obtaining a transition metal-containing compound in which at least one selected from the group consisting of Ni, Mn, Co, and Al and at least one of Nb, Mo, Ta, and W are composited, and a second step of obtaining a lithium-containing composite oxide by baking a mixture containing the transition metal-containing compound obtained in the first step and a lithium compound.

The transition metal-containing compound in the first step can be obtained by a method of depositing and precipitating using a solution containing each metal element, or mechanical milling such as ball milling. As the step of depositing and precipitating, a step utilizing a difference in solubility, or an existing method utilizing a sol-gel method, spray drying, or the like can be used.

Examples of the lithium compound in the second step include lithium carbonate and lithium hydroxide.

A baking temperature of the mixture in the second step is, for example, higher than or equal to 600°C and lower than or equal to 1,000°C. A baking atmosphere may be air, oxygen, or the like.

As described above, at least one of Nb, Mo, Ta, and W can be dispersed throughout the secondary particles of the lithium-containing composite oxide by compositing at least one of Nb, Mo, Ta, and W in the first step, such that the coefficient of variation in the concentration of at least one of Nb, Mo, Ta, and W described above is set to be less than or equal to 0.7, and the standard deviation of the primary particle size is easily controlled to be less than 0.05. In addition, the coefficient of variation can also be controlled, for example, by adjusting the baking temperature or the baking time in the second step. In addition, the primary particle size of the lithium-containing composite oxide can also be controlled by adjusting the baking temperature and the baking time in the second step, or the amounts of Nb, Mo, Ta, and W added.

Examples of the conductive agent include carbon-based particles such as carbon black (CB), acetylene black (AB), Ketjenblack, and graphite. These conductive agents may be used alone or in combination of two or more thereof.

Examples of the binder include fluororesins such as polytetrafluoroethylene (PTFE) and polyvinylidene fluoride (PVDF), polyacrylonitrile (PAN), polyimides, acrylic resins, polyolefins, cellulose derivatives such as carboxymethylcellulose (CMC) and its salts, and polyethylene oxide (PEO). These binders may be used alone or in combination of two or more thereof.

### [Negative Electrode]

The negative electrode 12 includes, for example, a negative electrode current collector such as a metal foil and a negative electrode mixture layer formed on the negative electrode current collector. The negative electrode current collector may be, for example, a foil of a metal, such as copper, that is stable in a potential range of the negative electrode, a film in which the metal is disposed on its surface layer. The negative electrode mixture layer contains, for example, a negative electrode active material, a binder, and the like.

The negative electrode 12 is obtained by, for example, applying a negative electrode mixture slurry containing a negative electrode active material, a binder, and the like onto a negative electrode current collector and drying the slurry to form a negative electrode mixture layer on the negative electrode current collector, and rolling the negative electrode mixture layer. The negative electrode mixture layer may be provided on one surface of the negative electrode current collector, or may be provided on both surfaces of the negative electrode current collector.

The negative electrode active material is not particularly limited as long as it is a material capable of occluding and releasing lithium ions, and examples thereof include metal lithium, lithium alloys such as a lithium-aluminum alloy, a lithium-lead alloy, a lithium-silicon alloy, and a lithium-tin alloy, carbon materials such as graphite, coke, and organic substance baked bodies, and metal oxides such as SnO₂, SnO, and TiO₂. These negative electrode active materials may be used alone or in combination of two or more thereof.

As the binder, for example, a fluororesin, PAN, a polyimide, an acrylic resin, a polyolefin, or the like can be used as in the case of the positive electrode 11, and examples thereof include styrene-butadiene rubber (SBR), CMC and a salt thereof, polyacrylic acid (PAA) and a salt thereof, and polyvinyl alcohol (PVA).

### [Separator]

As the separator 13, for example, a porous sheet having an ion permeation property and an insulation property is used. Specific examples of the porous sheet include fine porous thin films, woven fabrics, and nonwoven fabrics. As a material for the separator, olefin-based resins such as polyethylene and polypropylene, cellulose, and the like are suitable. The separator 13 may be a laminate including a cellulose fiber layer and a thermoplastic resin fiber layer such as an olefin-based resin. The separator may be a multilayer separator including a polyethylene layer and a polypropylene layer, and a separator may be used that has a surface to which a material such as an aramid-based resin or a ceramic is applied.

### EXAMPLES

Hereinafter, the present disclosure will be further described with reference to Examples. However, the present disclosure is not limited to the following Examples.

### <Example 1>

### [Preparation of Positive Electrode Active Material]

A solution obtained by mixing NiSO₄, MnSO₄, and ammonium metatungstate at a molar ratio of 80:20:0.2 was granulated by spray drying, and then baked at 400°C for 4 hours in the air to obtain a metal element-containing compound containing Ni, Mn, and W. The obtained metal element-containing compound and a lithium compound were mixed so that a molar ratio of the total amount of Ni and Mn to Li was 1: 1.11, and the mixture was baked in oxygen at 790°C for 10 hours and then pulverized, thereby obtaining a lithium-containing composite oxide.

Elemental analysis of the obtained lithium-containing composite oxide was performed by ICP emission spectrometry, and the molar ratios of the respective elements Ni, Mn, and W to the entire metal elements excluding lithium were 80, 20, and 0.2, respectively. The lithium-containing composite oxide was used as a positive electrode active material of Example 1.

### [Manufacture of Positive Electrode]

After mixing 98 parts by mass of the positive electrode active material, 1 part by mass of acetylene black (AB) as a conductive agent, and 1 part by mass of polyvinylidene fluoride as a binder, an appropriate amount of N-methyl-2-pyrrolidone (NMP) was added to prepare a positive electrode mixture slurry. Next, the positive electrode mixture slurry was applied onto both surfaces of a positive electrode current collector formed of an aluminum foil, and a coating film was dried and then rolled using a rolling roller. As such, a positive electrode in which a positive electrode mixture layer was formed on both surfaces of the positive electrode current collector was manufactured.

From the obtained positive electrode, a cross section of the positive electrode mixture layer was prepared by the cross section polisher (CP) process described above. Then, the secondary particle cross section of the positive electrode active material was subjected to EPMA analysis under the above-described conditions, and a coefficient of variation of a W concentration (standard deviation of W concentration/arithmetic mean of W concentration) was obtained, and as a result, it was 0.046. In addition, the cross section of the positive electrode mixture layer was observed by SEM, and the primary particle size of the positive electrode active material was measured under the above-described conditions. As a result, the average primary particle size of the positive electrode active material was 0.05 µm², and the standard deviation of the primary particle size was 0.04.

In addition, the secondary particles of the positive electrode active material had an average particle size of 17 µm, and the crystallite size of the positive electrode active material was 470 Å. The measurement conditions of these physical properties are as described above.

### [Manufacture of Negative Electrode]

98 parts by mass of graphite, 1 part by mass of carboxymethyl cellulose (CMC), and 1 part by mass of styrene-butadiene rubber (SBR) were mixed to prepare a negative electrode mixture slurry. Next, the negative electrode mixture slurry was applied onto both surfaces of a negative electrode current collector formed of a copper foil, and a coating film was dried and then rolled using a rolling roller. As such, a negative electrode in which a negative electrode mixture layer was formed on both surfaces of the negative electrode current collector was manufactured.

### [Preparation of Non-Aqueous Electrolyte]

Ethylene carbonate (EC), dimethyl carbonate (DMC), and ethyl methyl carbonate (EMC) were mixed at a volume ratio of 20:75:5. LiPF₆ was dissolved in the mixed solvent so as to attain a concentration of 1.3 mol/L to prepare a non-aqueous electrolyte.

### [Manufacture of Non-Aqueous Electrolyte Secondary Battery]

Each of the positive electrode and the negative electrode was cut into a predetermined size, an electrode tab was attached thereto, and the positive electrode and the negative electrode were wound with a separator interposed therebetween to produce a winding-type electrode assembly. Next, the electrode assembly was housed in an aluminum laminate film, and the non-aqueous electrolyte was injected and sealed. This was used as a non-aqueous electrolyte secondary battery of Example 1.

### <Example 2>

A lithium-containing composite oxide was prepared in the same manner as in Example 1, except that ammonium metatungstate was changed to ammonium niobium oxalate, and the molar ratio of the total amount of Ni and Mn to Nb was changed to 100:0.25.

Elemental analysis of the obtained lithium-containing composite oxide was performed by ICP emission spectrometry, and the molar ratios of the respective elements Ni, Mn, and Nb to the entire metal elements excluding lithium were 80, 20, and 0.25, respectively. The lithium-containing composite oxide was used as a positive electrode active material of Example 2.

Then, a non-aqueous electrolyte secondary battery was manufactured in the same manner as in Example 1, except that the positive electrode active material of Example 2 was used.

A cross section of the positive electrode mixture layer was prepared in the same manner as in Example 1. Then, the secondary particle cross section of the positive electrode active material was subjected to EPMA analysis, and a coefficient of variation of a Nb concentration (standard deviation of Nb concentration/arithmetic mean of Nb concentration) was obtained, and as a result, it was 0.392. In addition, as a result of observing the cross section of the positive electrode mixture layer using SEM, the average primary particle size of the positive electrode active material was 0.06 µm², and the standard deviation of the primary particle size was 0.04.

The secondary particles of the positive electrode active material had an average particle size of 17 µm, and the crystallite size of the positive electrode active material was 510 Å.

### <Comparative Example 1>

A nickel-manganese composite oxide, lithium hydroxide, and tungsten oxide powder were mixed. In the mixture, a mixing ratio of lithium, the total of nickel and manganese, and tungsten was 1.11:1:0.002 in terms of molar ratio. The mixture was baked in oxygen at 790°C for 10 hours to obtain a lithium-containing composite oxide.

Elemental analysis of the obtained lithium-containing composite oxide was performed by ICP emission spectrometry, and the molar ratios of the respective elements Ni, Mn, and W to the entire metal elements excluding lithium were 80, 20, and 0.2, respectively. The lithium-containing composite oxide was used as a positive electrode active material of Comparative Example 1.

Then, a non-aqueous electrolyte secondary battery was manufactured in the same manner as in Example 1, except that the positive electrode active material of Comparative Example 1 was used.

A cross section of the positive electrode mixture layer was prepared in the same manner as in Example 1. Then, the secondary particle cross section of the positive electrode active material was subjected to EPMA analysis, and a coefficient of variation of a W concentration (standard deviation of W concentration/arithmetic mean of W concentration) was obtained, and as a result, it was 0.726. In addition, as a result of observing the cross section of the positive electrode mixture layer using SEM, the average primary particle size of the positive electrode active material was 0.07 µm², and the standard deviation of the primary particle size was 0.05.

The secondary particles of the positive electrode active material had an average particle size of 17 µm, and the crystallite size of the positive electrode active material was 520Å.

### <Comparative Example 2>

A nickel-manganese composite oxide, lithium hydroxide, and niobium oxide powder were mixed. In the mixture, a mixing ratio of lithium, the total of nickel and manganese, and niobium was 1.11:1:0.0025 in terms of molar ratio. The mixture was baked in the air at 790°C for 10 hours to obtain a lithium-containing composite oxide.

Elemental analysis of the obtained lithium-containing composite oxide was performed by ICP emission spectrometry, and the molar ratios of the respective elements Ni, Mn, and Nb to the entire metal elements excluding lithium were 80, 20, and 0.25, respectively. The lithium-containing composite oxide was used as a positive electrode active material of Comparative Example 2.

Then, a non-aqueous electrolyte secondary battery was manufactured in the same manner as in Example 1, except that the positive electrode active material of Comparative Example 2 was used.

A cross section of the positive electrode mixture layer was prepared in the same manner as in Example 1. Then, the secondary particle cross section of the positive electrode active material was subjected to EPMA analysis, and a coefficient of variation of a Nb concentration (standard deviation of Nb concentration/arithmetic mean of Nb concentration) was obtained, and as a result, it was 1.018. In addition, as a result of observing the cross section of the positive electrode mixture layer using SEM, the average primary particle size of the positive electrode active material was 0.07 µm², and the standard deviation of the primary particle size was 0.05.

The secondary particles of the positive electrode active material had an average particle size of 17 µm, and the crystallite size of the positive electrode active material was 520 Å.

### [Measurement of Initial Capacity of Battery]

The battery of each of Examples and each of Comparative Examples was subjected to constant current charge at 0.2 C until a cell voltage reached 4.5 V, and then was subjected to constant voltage charge at 4.5 V until a current value reached 0.02 C, under a temperature environment at 25°C. Next, constant current discharge was performed at 0.2 C until a cell voltage reached 2.5 V The discharge capacity at the first cycle was taken as the initial capacity of the battery.

### [Charge and Discharge Cycle Test]

In addition, the battery of each of Examples and each of Comparative Examples was charged and discharged for 25 cycles under the above charge and discharge conditions, and a capacity retention rate in the charge and discharge cycle was determined by the following equation. Capacity retention rate = (discharge capacity at 25th cycle/discharge capacity at 1st cycle) × 100

Table 1 summarizes the results of the initial capacity, the initial efficiency (discharge capacity/charge capacity at the first cycle) × 100), and the capacity retention rate of the battery in each of Examples and each of Comparative Examples.

**[Table 1]**

| | Lithium-containing composite oxide | | | | Battery evaluation | | |
|---|---|---|---|---|---|---|---|
| | Additive element | Coefficient of variation of additive element concentration | Primary particles | | Initial capacity (mAh/g) | Initial efficiency (%) | Capacity retention rate (%) |
| | | | Standard deviation of size | Average size (µm²) | | | |
| Example 1 | W | 0.046 | 004 | 0.05 | 217.9 | 89.8 | 95.3 |
| Example 2 | Nb | 0.392 | 0.04 | 0.06 | 220.0 | 90.3 | 92.8 |
| Comparative Example 1 | W | 0.726 | 0.05 | 0.07 | 217.1 | 89.7 | 92.4 |
| Comparative Example 2 | Nb | 1.018 | 0.05 | 0.07 | 217.1 | 89.7 | 92.4 |

When comparing Example 1 and Comparative Example 1 in which the additive element of the lithium-containing composite oxide was W, the initial capacity of the battery was improved in Example 1 in which the coefficient of variation (standard deviation/arithmetic mean) of the concentration of W when the secondary particle cross section of the lithium-containing composite oxide was subjected to EPMA analysis was less than or equal to 0.7, and the standard deviation of the primary particle size of the lithium-containing composite oxide was less than 0.05, as compared with Comparative Example 1 in which the coefficient of variation of the concentration of W and the standard deviation of the primary particle size did not satisfy the above ranges. In addition, when comparing Example 2 and Comparative Example 2 in which the additive element of the lithium-containing composite oxide was Nb, the initial capacity of the battery was improved in Example 2 in which the coefficient of variation (standard deviation/arithmetic mean) of the concentration of Nb when the secondary particle cross section of the lithium-containing composite oxide was subjected to EPMA analysis was less than or equal to 0.7, and the standard deviation of the primary particle size of the lithium-containing composite oxide was less than 0.05, as compared with Comparative Example 2 in which the coefficient of variation of the concentration of Nb and the standard deviation of the primary particle size did not satisfy the above ranges. Note that, in Examples 1 and 2, the capacity retention rate in the charge and discharge cycle was also improved as compared with Comparative Examples 1 and 2.

### REFERENCE SIGNS LIST

- 10: Non-aqueous electrolyte secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket

## Claims

1. A positive electrode active material for a non-aqueous electrolyte secondary battery, comprising:
a lithium-containing composite oxide composed of secondary particles formed by aggregation of primary particles, the lithium-containing composite oxide including at least one metal element selected from the group consisting of Ni, Co, Mn, and Al, and an additive element M,
wherein the additive element M includes at least one of Nb, Mo, Ta, and W,
a coefficient of variation (standard deviation/arithmetic mean) of a concentration of at least one of Nb, Mo, Ta, and W when a cross section of the secondary particle is subjected to EPMA analysis is less than or equal to 0.7, and
a standard deviation of a size of the primary particle is less than 0.05.

2. A positive electrode active material for a non-aqueous electrolyte secondary battery, comprising:
a lithium-containing composite oxide composed of secondary particles formed by aggregation of primary particles, the lithium-containing composite oxide including Ni, Mn, and an additive element M,
wherein the additive element M includes at least one of Nb, Mo, Ta, and W,
a coefficient of variation (standard deviation/arithmetic mean) of a concentration of at least one of Nb, Mo, Ta, and W when a cross section of the secondary particle is subjected to EPMA analysis is less than or equal to 0.7, and
a standard deviation of a size of the primary particle is less than 0.05.

3. The positive electrode active material for a non-aqueous electrolyte secondary battery according to claim 1 or 2, wherein an average size of the primary particles is less than or equal to 0.07 µm².

4. The positive electrode active material for a non-aqueous electrolyte secondary battery according to any one of claims 1 to 3, wherein an average particle size of the secondary particles is greater than or equal to 3 µm and less than or equal to 25 µm.

5. The positive electrode active material for a non-aqueous electrolyte secondary battery according to any one of claims 1 to 4, wherein a crystallite size of the lithium-containing composite oxide is greater than or equal to 300 Å and less than or equal to 600 Å when determined by an X-ray diffraction method.
